# EUROPÄISCHE PATENTSCHRIFT

(11) **EP 3 166 172 B1**
(45) Veröffentlichungstag und Bekanntmachung des Hinweises auf die Patenterteilung: **09.01.2019**
(21) Anmeldenummer: 15193294.4
(22) Anmeldetag: 05.11.2015
(51) Int. Cl.: H01M 10/42, H01M 10/44

(54) **BATTERIEZELLE MIT EINER SCHNELLENTLADEEINHEIT UND SCHNELLENTLADEVERFAHREN FÜR EINE SOLCHE BATTERIEZELLE**
BATTERY CELL WITH A FAST DISCHARGING UNIT AND FAST DISCHARGING METHOD FOR SUCH A BATTERY CELL
ÉLEMENT DE BATTERIE COMPRENANT UNE UNITE DE DECHARGE RAPIDE ET PROCEDE DE DECHARGE RAPIDE POUR UN TEL ELEMENT DE BATTERIE

(43) Veröffentlichungstag der Anmeldung: 10.05.2017
(73) Patentinhaber: Lithium Energy and Power GmbH & Co. KG, 70469 Stuttgart (DE)
(72) Erfinder: Masuda, Hideki, Osaka 532-0026 (JP); Katsumata, Yutaro, Kyoto 602-8072 (JP); Wilka, Marcel, Osaka 602-0802 (JP); Friedrich, Marco, 71638 Ludwigsburg (DE); Leuthner, Stephan, 71229 Leonberg (DE); Liebenow, Cornelius, 70372 Stuttgart (DE); Ashida, Yuji, 70191 Stuttgart (DE); Mizutani, Shunsuke, 664-0856 Hyogo Prefecture (JP); Konishi, Daisuke, 70191 Stuttgart (DE); Kitano, Shinya, 70174 Stuttgart (DE)
(74) Vertreter: Isarpatent

(56) Entgegenhaltungen:
- EP-A2- 0 926 796
- DE-A1-102013 204 534
- Shriram Santhanagopalan ET AL: "Chapter 5 - Separators for Lithium-Ion Batteries", Lithium-Ion Batteries: Advanced Materials and Technologies, 1. Januar 2011 (2011-01-01), Seiten 197-251, XP055195568, ISBN: 978-1-43-984129-7 Gefunden im Internet: URL:http://www.crcnetbase.com/doi/pdf/10.1 201/b11292-6 [gefunden am 2015-06-12]

## Beschreibung

Die vorliegende Erfindung betrifft eine Batteriezelle mit zwei von innerhalb und/oder außerhalb der Batteriezelle kontaktierbaren Batteriezellterminals und einem beispielsweise als Jelly Roll ausgebildeten elektrochemischen Teil, der mehrere Elektroden und wenigstens einen Separator umfasst. Dabei wird der wenigstens eine Separator bei Erreichen einer vordefinierten Temperatur für in dem elektrochemischen Teil erzeugbare Ionen zumindest teilweise undurchlässig. Die vorliegende Erfindung betrifft ferner ein Schnellentladeverfahren für eine solche Batteriezelle. Auch betrifft die Erfindung ein Batteriesystem mit einer Batterie mit mindestens einer solchen Batteriezelle.

### Stand der Technik

Es ist bekannt, dass eine Batteriezelle bei Vorliegen eines Fehlers oder infolge einer übermäßigen Beanspruchung ein kritisches oder gefährliches Verhalten annehmen kann. Ein solches Verhalten kann ein thermisches Durchgehen der Batteriezelle, das infolge von in einem Inneren der Batteriezelle vorkommenden exothermen Reaktionen ausgelöst wird, ein Entgasen der Batteriezelle, ein Entstehen eines Feuers in der Batteriezelle und/oder sogar eine Explosion der Batteriezelle umfassen. Eine als elektrochemischer Energiespeicher ausgebildete Batteriezelle umfasst einen elektrochemischen Teil, der beispielsweise in Form einer Jelly Roll ausgebildet ist.

Dokument EP 0 926 796 A2 beschreibt eine Schutzvorrichtung für eine Batterie mit zwei Elektroden. Die Schutzvorrichtung umfasst Erfassungsmittel zum Erfassen wenigstens einer Anomalie der Batterie und Kurzschlussmittel zum Kurzschließen der zwei Elektroden beim Vorliegen einer Anomalie der Batterie.

Die Schutzvorrichtung umfasst ferner eine Steuereinheit zum Steuern eines Kurzschluss-Widerstandes oder eines Kurzschluss-Entladestromes zwischen den zwei Elektroden. Dabei ist es notwendig, einen Widerstandswert des Kurzschluss-Widerstandes derartig auszuwählen, dass der Kurzschluss-Entladestrom nicht zu einer Erhöhung einer verursachten Wärmemenge über einen kritischen Grenzwert führt. Anderenfalls ist es notwendig, den Kurzschluss-Entladestrom so zu steuern, dass die Kurzschlussmittel nicht infolge des Kurzschluss-Entladestromes schmelzen.

Dokument XP 055195568 beschreibt eine Lithium-Ionen-Batteriezelle mit einem elektrochemischen Teil, der zwei Elektroden und einen Separator umfasst. Der Separator wird bei Erreichen einer vordefinierten Temperatur für in dem elektrochemischen Teil erzeugbare Ionen zumindest teilweise undurchlässig.

Dokument DE 10 2013 204 534 A1 beschreibt eine Batteriezelleinrichtung mit einer Batteriezelle und einer Überwachungsvorrichtung zum Überwachen der Batteriezelle. Die Überwachungsvorrichtung umfasst eine Aktorvorrichtung, die dazu ausgebildet ist, die Batteriezelle aus einem kritischen und/oder kritisch werdenden Batteriezellzustand in einen sicheren Betriebsmodus zu überführen und/oder zu halten. Die Aktorvorrichtung ist ferner dazu ausgebildet, zum Überführen der Batteriezelle in den sicheren Betriebsmodus und/oder zum Halten der Batteriezelle in dem sicheren Betriebsmodus eine in der Batteriezelleinrichtung angeordnete Entladevorrichtung zu aktivieren, die dazu vorgesehen ist, in einem aktivierten Entlademodus die Batteriezelle mittels eines vorbestimmten Entladestroms und/oder in einem aktivierten Schnellentlademodus die Batteriezelle mittels eines Entladestroms, der einen vorbestimmten Bruchteil eines Kurzschlussstromes der Batteriezelle beträgt, zu entladen.

### Offenbarung der Erfindung

Erfindungsgemäß wird eine Batteriezelle mit zwei von innerhalb und/oder außerhalb der Batteriezelle kontaktierbaren Batteriezellterminals und einem beispielsweise als Jelly Roll ausgebildeten elektrochemischen Teil bereitgestellt. Dabei umfasst der elektrochemische Teil mehrere Elektroden und wenigstens einen Separator. Der wenigstens eine Separator wird bei Erreichen einer
vordefinierten Temperatur für in dem elektrochemischen Teil erzeugbare Ionen zumindest teilweise undurchlässig. Die erfindungsgemäße Batteriezelle weist eine Schnellentladeeinheit auf, die zwischen die Batteriezellterminals zuschaltbar ist und einen vordefinierten Widerstandswert aufweist. Der vordefinierte Widerstandswert wird derartig ausgewählt, dass bei zugeschalteter Schnellentladeeinheit der wenigstens eine Separator die vordefinierte Temperatur erreicht. Dabei erreicht der wenigstens eine Separator die vordefinierte Temperatur bei Abwesenheit eines Kurzschlusspfads in einem Inneren der Batteriezelle innerhalb eines vordefinierten ersten Zeitraums. Ferner erreicht der wenigstens eine Separator die vordefinierte Temperatur bei Vorliegen des Kurzschlusspfads innerhalb eines vordefinierten zweiten Zeitraums. Der vordefinierte Widerstandswert wird gleichzeitig derartig ausgewählt, dass bei Abwesenheit des Kurzschlusspfads eine erste elektrische Energiemenge einen ersten Energiegrenzwert unterschreitet. Dabei stimmt die erste Energiemenge mit einer Energiemenge überein, die bei Abwesenheit des Kurzschlusspfads infolge eines durch die Schnellentladeeinheit fließenden Entladestroms während eines variablen dritten Zeitraums in Wärme umgewandelt wird. Der erste Energiegrenzwert wird derartig ausgewählt, dass nur bei seinem Überschreiten durch die erste Energiemenge eine Überhitzung der gesamten Batteriezelle auftreten kann, die ein thermisches Durchgehen der Batteriezelle auslöst. Der erste und der zweite Zeitraum beginnen jeweils bei Zuschalten der Schnellentladeeinheit und enden jeweils bei Erreichen der vordefinierten Temperatur. Der dritte Zeitraum beginnt gleichzeitig mit dem ersten Zeitraum und weist eine maximale Dauer auf, die größer oder gleich einer Dauer des ersten Zeitraums ist.

Die Unteransprüche zeigen bevorzugte Weiterbildungen der Erfindung.

Bevorzugt ist eine Dauer des ersten Zeitraumes gleich einer Dauer des zweiten Zeitraumes.

Vorteilhaft bei der zuvor beschriebenen Batteriezelle ist, dass ein durch die Schnellentladeeinheit fließender Entladestrom mit hohem Stromwert zu einer Erhitzung der gesamten Batteriezelle führt, die wiederum zu einer zumindest teilweise Deaktivierung des wenigstens einen Separators innerhalb des ersten oder zweiten Zeitraumes führt. Dabei wird eine Höhe des Stromwertes des durch die Schnellentladeeinheit fließenden Entladestroms durch eine Wahl des vordefinierten Widerstandswerts festgelegt. Die zumindest teilweise Deaktivierung des wenigstens einen Separators kann während einer Gefahrensituation eingeleitet werden, in der beispielsweise in dem Inneren der Batteriezelle der Kurzschlusspfad auftritt oder auftreten kann und in der die

Batteriezelle folglich ein kritisches oder gefährliches Verhalten annehmen kann. Ein solches Verhalten kann auch ein thermisches Durchgehen der Batteriezelle umfassen. Die zumindest teilweise Deaktivierung des wenigstens einen Separators wird dabei dadurch erreicht, dass dieser innerhalb des ersten oder des zweiten Zeitraums die vordefinierte Temperatur erreicht und dadurch für die in dem elektrochemischen Teil erzeugbaren Ionen zumindest teilweise undurchlässig wird. Auf diese Weise kann bei Vorliegen der Gefahrensituation ein Stromwert eines von der Batteriezelle erzeugte Entladestroms und dadurch auch eine weitere Erhitzung der Batteriezelle reduziert werden. So kann während der Gefahrensituation ein Auftreten des kritischen oder gefährlichen Verhaltens der Batteriezelle, insbesondere deren thermisches Durchgehen, vermieden werden. Wenn beispielsweise der wenigstens eine Separator bei Erreichen der vordefinierten Temperatur innerhalb einer Teilfläche, die 85% seiner Gesamtfläche beträgt, für die zuvor genannten Ionen undurchlässig wird, so wird der Stromwert des von der Batteriezelle erzeugte Entladestroms bei einer Batteriezellkapazität von circa 40 Ah typischerweise kleiner als oder gleich 100 A. Wenn der wenigstens eine Separator bei Erreichen der vordefinierten Temperatur innerhalb seiner Gesamtfläche für die zuvor genannten Ionen undurchlässig wird, so wird der Stromwert des von der Batteriezelle erzeugten Entladestroms auf 0 A reduziert. In beiden Fallen werden die Elektroden des elektrochemischen Teils durch den wenigstens einen Separator gegeneinander elektrisch isoliert.

Bei einer zuvor beschriebenen Batteriezelle, die zwei von innerhalb und/oder außerhalb der Batteriezelle kontaktierbare Batteriezellterminals umfasst, können die zwei Batteriezellterminals als Teile eines Batteriezellgehäuses der Batteriezelle ausgebildet sein. Dabei kann ferner die Schnellentladeeinheit innerhalb oder außerhalb des Batteriezellgehäuses angeordnet sein oder als Teil des Batteriezellgehäuses ausgebildet sein.

Bei einer zuvor beschriebenen Batteriezelle weist der wenigstens eine Separator bevorzugt wenigstens eine Keramikbeschichtung auf.

Gemäß einer bevorzugten ersten Weiterbildung der Erfindung, umfasst eine zuvor beschriebene Batteriezelle eine Steuereinheit. Die Steuereinheit ist dazu ausgebildet, die Schnellentladeeinheit innerhalb eines vierten vordefinierten Zeitraums zuzuschalten. Dabei beginnt der vierte Zeitraum unmittelbar nach einem Erkennen einer Gefahrensituation, in der in dem Inneren der Batteriezelle der Kurzschlusspfad auftritt oder auftreten kann oder in der ein hohes Risiko eines bevorstehenden kritischen Verhaltens der Batteriezelle erwartet wird. Ferner endet der vierte Zeitraum bei Zuschalten der Schnellentladeeinheit.

Bei einer zuvor beschriebenen Batterie ist ein bei zugeschalteter Schnellentladeeinheit und/oder bei Vorliegen des Kurzschlusspfads von der Batteriezelle erzeugter Entladestrom bevorzugt gleich einem maximal von der entsprechenden Batteriezelle erzeugbaren Entladestrom.

Ein Vorteil einer zuvor beschriebenen Batteriezelle, bei der bei Vorliegen des Kurzschlusspfads die Schnellentladeeinheit zugeschaltet wird, ist, dass ein über die Schnellentladeeinheit verlaufender Schnellentladepfad erzeugt wird, der parallel zu dem Kurzschlusspfad zugeschaltet ist. Dabei teilt sich ein von der Batteriezelle erzeugter Entladestrom zwischen dem Kurzschlusspfad und dem Schnellentladepfad auf und fließt folglich nicht gänzlich durch den Kurzschlusspfad. Das bedeutet, dass bei Vorliegen des Kurzschlusspfads und zugeschalteter Schnellentladeeinheit der von der Batteriezelle erzeugte Entladestrom gleich einer Summe von einem durch die Schnellentladeeinheit fließenden Entladestrom und einem durch den Kurzschlusspfad fließenden Entladestrom ist. Dadurch wird durch Zuschalten der Schnellentladeeinheit ein Stromwert des durch den Kurzschlusspfad fließenden Entladestroms reduziert und somit auch eine Überhitzung eines den Kurzschlusspfad umfassenden Batteriezellbereichs vermieden. Gleichzeitig führt der durch die Schnellentladeeinheit fließende Entladestrom zu einer Erhitzung der gesamten Batteriezelle, die wiederum dazu führt, dass der wenigstens eine Separator und folglich auch die Batteriezelle innerhalb der zweiten vordefinierten Zeit zumindest teilweise deaktiviert werden.

Eine zuvor genannte Gefahrensituation kann infolge einer Beschädigung einer zuvor beschriebenen Batteriezelle verursacht werden, die beispielsweise infolge eines Unfalls oder eines ungewöhnlich heftigen mechanischen Schocks auftreten kann. Ein solcher Schock kann durch einen Sturz, einen Stoß oder einen Aufprall der Batteriezelle verursacht werden. Eine zuvor genannte Gefahrensituation kann ferner infolge einer übermäßigen Beanspruchung einer zuvor beschriebenen Batteriezelle oder eines darin bestehenden elektrischen Fehlers auftreten, der beispielsweise durch einen Kurzschluss im Inneren der entsprechenden Batteriezelle verursacht wird.

Bevorzugt kann eine zuvor genannte Gefahrensituation während eines Sicherheitstests einer zuvor beschriebenen Batteriezelle oder während ihres Betriebs auftreten.

Bevorzugt wird während des Sicherheitstests im Inneren einer zuvor beschriebenen Batteriezelle der Kurzschlusspfad durch Penetrieren der entsprechenden Batteriezelle mittels eines Nagels erzeugt.

Gemäß einer bevorzugten zweiten Weiterbildung der Erfindung, die mit der ersten bevorzugten Weiterbildung und/oder deren Ausgestaltungen kombiniert werden kann, ist der elektrochemische Teil derartig ausgebildet und bevorzugt eine zuvor beschriebene Batteriezelle derartig dimensioniert, dass eine zweite und eine dritte elektrische Energiemenge jeweils einen zweiten Energiegrenzwert unterschreiten. Alternativ oder zusätzlich unterschreitet eine Summe von der zweiten und der dritten Energiemenge einen dritten Energiegrenzwert. Dabei unterschreiten die zweite und die dritte Energiemenge und/oder deren Summe jeweils den entsprechenden Energiegrenzwert dann, wenn bei Vorliegen des Kurzschlusspfads eine Dauer des vierten Zeitraums einen Zeitgrenzwert und der vordefinierte Widerstandswert einen Widerstandsgrenzwert unterschreiten. Die zweite Energiemenge stimmt mit einer Energiemenge überein, die bei Vorliegen des Kurzschlusspfads infolge eines durch den Kurzschlusspfad fließenden Entladestroms während eines variablen fünften Zeitraums in Wärme umgewandelt wird. Die dritte Energiemenge stimmt mit einer Energiemenge überein, die bei Vorliegen des Kurzschlusspfads infolge eines durch die Schnellentladeeinheit fließenden Entladestroms während des fünften Zeitraums in Wärme umgewandelt wird. Der fünfte Zeitraum beginnt gleichzeitig mit dem zweiten Zeitraum und weist eine maximale Dauer auf, die größer als eine oder gleich einer Dauer des zweiten Zeitraums ist.

Gemäß einer bevorzugten dritten Weiterbildung der Erfindung, die mit einer oder mehreren der zuvor beschriebenen Weiterbildungen und/oder deren Ausgestaltungen kombiniert werden kann, ist der zweite Energiegrenzwert kleiner als der dritte Energiegrenzwert. Alternativ oder zusätzlich ist der dritte Energiegrenzwert kleiner als der oder gleich dem ersten Energiegrenzwert.

Bei einer zuvor beschriebenen Batteriezelle wird der zweite Energiegrenzwert bevorzugt derartig ausgewählt, dass nur bei seinem Überschreiten durch die zweite und/oder die dritte Energiemenge eine Überhitzung des den Kurzschlusspfad umfassenden Batteriezellbereichs auftreten kann, die das
thermisches Durchgehen der Batteriezelle auslöst. Bei einer zuvor beschriebenen Batteriezelle wird ferner der dritte Energiegrenzwert bevorzugt derartig ausgewählt, dass nur bei seinem Überschreiten durch die Summe von

der zweiten und der dritten Energiemenge eine Überhitzung der gesamten Batteriezelle auftreten kann, die das thermische Durchgehen der Batteriezelle auslöst.

Ein Vorteil einer zuvor beschriebenen Batteriezelle, bei der die erste Energiemenge den ersten Energiegrenzwert unterschreitet, ist, dass eine Überhitzung der gesamten entsprechenden Batteriezelle vermieden wird, die zu einem Auslösen des thermischen Durchgehens der Batteriezelle führt. Dabei wird auch ein durch eine solche Überhitzung erzeugbares Schrumpfen oder Auflösen des wenigstens einen Separators und folglich auch ein durch Schrumpfen oder Auflösen des wenigstens einen Separators im Inneren der entsprechenden Batteriezelle erzeugbarer Kurzschluss vermieden. Derselbe Vorteil ergibt sich auch für eine zuvor beschriebene Batteriezelle, bei der die Summe von der zweiten und der dritten Energiemenge den dritten Energiegrenzwert unterschreitet.

Ein Vorteil einer zuvor beschriebenen Batteriezelle, bei der die zweite und die dritte Energiemenge jeweils den zweiten Energiegrenzwert unterschreiten, ist, dass eine Überhitzung des den Kurzschlusspfad umfassenden Batteriezellteilbereichs vermieden wird, die zu einem Auslösen des thermischen Durchgehens der entsprechenden Batteriezelle führt.

Eine zuvor beschriebene Batteriezelle ist bevorzugt eine prismenförmige Batteriezelle oder eine Pouchbatteriezelle oder eine Rundbatteriezelle oder eine Batteriezelle mit einem anderen mechanischen Format. Eine zuvor beschriebene Batteriezelle ist weiter bevorzugt eine Lithium-Ionen-Batteriezelle und/oder eine Batteriezelle für Anwendungen in Automobilbereich und/oder in stationären Energiespeichern.

Bei einer zuvor beschriebenen Batteriezelle kann ein Stromwert des maximal von der entsprechenden Batteriezelle bereitstellbaren Entladestroms und/oder ein Stromwert eines durch die zugeschaltete Schnelladeeinheit fließenden Entladestroms in einem Wertebereich liegen, der sich für eine beispielhafte Batteriezellkapazität von 40 Ah von 5·10³ A bis 10·10³ A erstreckt.

Bei einer zuvor beschriebenen Batteriezelle, die eine Lithium-Ionen-Batteriezelle mit einer beispielhaften Batteriezellkapazität von 40 Ah ist, kann der vordefinierte Widerstandswert der Schnellentladeeinheit kleiner als oder gleich 1·10⁻⁴ Ω oder 1·10⁻³ Ω sein oder in einem Wertebereich liegen, der sich von 1·10⁻⁴ Ω bis 1·10⁻³ Ω erstreckt.

Bei einer zuvor beschriebene Batteriezelle, die eine prismenförmige Batteriezelle für Anwendungen in Automobilbereich oder in stationären Energiespeichern ist und eine beispielhafte Batteriezellkapazität von 40 Ah aufweist, kann die Dauer des ersten und/oder des zweiten Zeitraums, während dem der wenigstens eine Separator die vordefinierte Temperatur erreicht, in einem Wertebereich liegen, der sich von 20 s bis 30 s erstreckt. In einem solchen Fall kann die Dauer des ersten und/oder des zweiten Zeitraums bevorzugt einen Wert von 30 s aufweisen.

Bei einer zuvor beschriebenen Batteriezelle mit einer beispielhaften Batteriezellkapazität von 40 Ah, bei der die Dauer des vierten Zeitraums den Zeitgrenzwert unterschreitet, kann der Zeitgrenzwert kleiner als oder gleich 250·10⁻³ s sein. In einem solchen Fall, kann die Dauer des vierten Zeitraums beispielsweise einen Wert von 100·10⁻³ s annehmen.

Bevorzugt sind der Stromwert des maximal von einer zuvor beschriebenen Batteriezelle erzeugbaren Entladestroms und/oder ein Stromwert eines durch die zugeschaltete Schnelladeeinheit fließenden Entladestroms und/oder ein Stromwert eines durch den Kurzschlusspfad fließenden Entladestroms jeweils abhängig von einer Batteriezellchemie und/oder von einer Batteriezellgröße.

Bevorzugt sind die Dauer des ersten und/oder des zweiten Zeitraumes und/oder der Zeitgrenzwert zum Begrenzen des vierten Zeitraumes abhängig von der Batteriezellgröße und/oder von mindestens einem der unmittelbar zuvor genannten Entladeströme und/oder von Eigenschaften des wenigstens einen Separators.

Ein weiterer Aspekt der Erfindung betrifft ein Verfahren zum Schnellentladen einer zuvor beschriebenen Batteriezelle, bei dem ein erster und ein zweiter Schritt durchgeführt werden. Der erste Schritt umfasst ein Erkennen einer zuvor genannten Gefahrensituation, in der sich die Batteriezelle in einem Zustand befindet, in dem der Kurzschusspfad in dem Inneren der Batteriezelle auftritt oder auftreten kann oder in dem ein hohes Risiko eines bevorstehenden kritischen Verhaltens der entsprechenden Batteriezelle erwartet wird. Der zweite Schritt umfasst ein Zuschalten der Schnellentladeeinheit zwischen die beiden von innerhalb und/oder außerhalb der Batteriezelle kontaktierbaren Batteriezellterminals bei Vorliegen der Gefahrensituation. Dabei kann die Schnellentladeeinheit sowohl innerhalb als auch außerhalb des Batteriezellgehäuses angeordnet sein und elektrisch mit den zwei Batteriezellterminals verbunden werden. Bevorzugt erfolgt das Zuschalten innerhalb des vierten vordefinierten Zeitraums.

Ein anderer Aspekt der Erfindung betrifft ein Batteriesystem mit einer Batterie mit mindestens einer zuvor beschriebenen Batteriezelle.

### Kurze Beschreibung der Zeichnungen

Nachfolgend wird ein Ausführungsbeispiel der Erfindung unter Bezugnahme auf die begleitende Zeichnungen im Detail beschrieben. Für gleiche Komponenten und Parameter werden jeweils gleiche Bezugszeichen verwendet. Jede Komponente und jeder Parameter werden jeweils einmalig eingeführt und bei Wiederholung jeweils als schon bekannt behandelt, unabhängig davon, auf welche Zeichnung sich ein jeweils entsprechender Beschreibungsteil, in dem die entsprechende Komponente oder der entsprechende Parameter wiederholt vorkommt, bezieht. In den Zeichnungen ist:

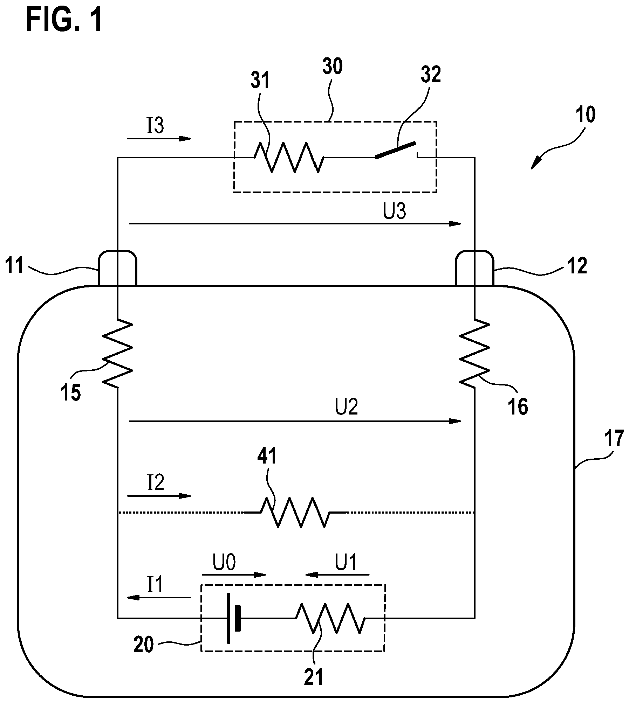

- Figur 1: eine Batteriezelle gemäß einer ersten Ausführungsform der Erfindung, wobei die Batteriezelle eine Schnellentladeeinheit und einen Kurzschlusspfad aufweist.

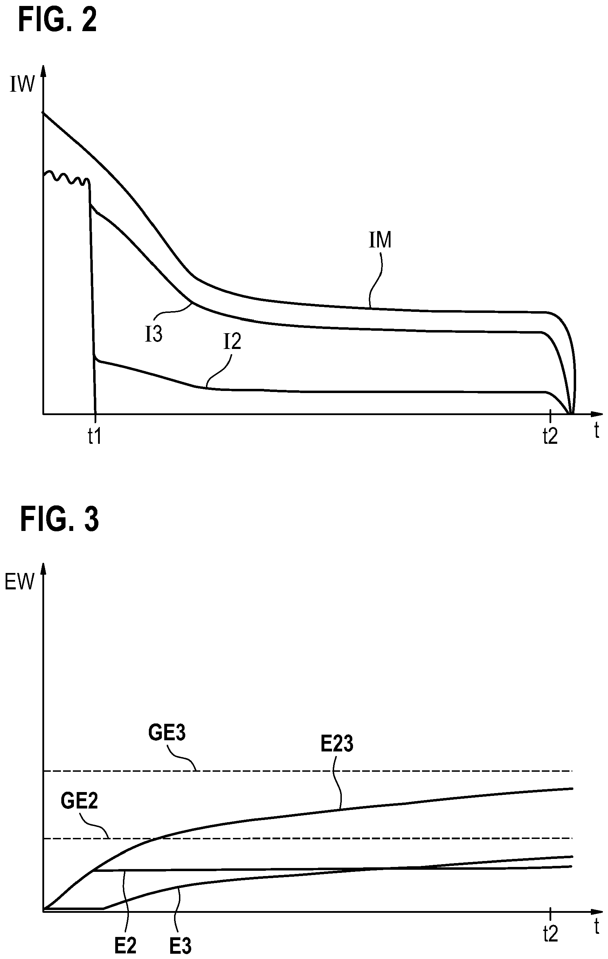

- Figur 2: ein zeitabhängiger Verlauf eines ersten Entladestroms, der gleich einem maximal von der Batteriezelle erzeugbaren Entladestrom ist, ein zeitabhängiger Verlauf eines durch den Kurzschlusspfad fließenden zweiten Entladestroms und ein zeitabhängiger Verlauf eines durch die Schnellentladeeinheit fließenden dritten Entladestroms, und
- Figur 3: ein zeitabhängiger Verlauf einer zweiten Energiemenge, die infolge des zweiten Entladestroms in Wärme umgewandelt wird, ein zeitabhängiger Verlauf einer dritten Energiemenge, die infolge des dritten Entladestroms in Wärme umgewandelt wird, und ein zeitabhängiger Verlauf einer Summe von der zweiten und dritten Energiemenge.

### Ausführungsform der Erfindung

Figur 1 zeigt eine Batteriezelle 10 gemäß einer ersten Ausführungsform der Erfindung. Die Batteriezelle 10 umfasst ein erstes Batteriezellterminal 11 und ein zweites Batteriezellterminal 12. Die zwei Batteriezellterminals 11, 12 sind von innerhalb und außerhalb der Batteriezelle 10 kontaktierbar. Die Batteriezelle 10 umfasst ferner einen beispielsweise als Jelly Roll ausgebildeten elektrochemischen Teil 20, der zwei folienförmige Elektroden (nicht separat dargestellt) umfasst. Der elektrochemische Teil 20 stellt eine Leerlaufspannung U0 der Batteriezelle 10 bereit und weist einen Innenwiderstand 21 auf. Das erste Batteriezellterminal 11 ist mit einer ersten Elektrode der zwei Elektroden verbunden. Eine Verbindung zwischen dem ersten Batteriezellterminal 11 und der ersten Elektrode weist einen ersten Widerstand 15 auf. Das zweite Batteriezellterminal 12 ist mit einer zweiten Elektrode der zwei Elektroden verbunden. Eine Verbindung zwischen dem zweiten Batteriezellterminal 12 und der zweiten Elektrode weist einen zweiten Widerstand 16 auf.

Die Batteriezelle 10 umfasst ferner einen Separator (nicht separat dargestellt), der bei Erreichen einer vordefinierten Temperatur für in dem elektrochemischen Teil 20 erzeugbare Ionen undurchlässig wird. Wenn der Separator die vordefinierte Temperatur erreicht, erfolgt folglich dessen zumindest teilweise Deaktivierung, durch die ein Stromwert eines von der Batteriezelle 10 erzeugten Entladestroms reduziert wird. Die Batteriezelle 10 umfasst weiterhin eine Schnellentladeeinheit 30, die in der schematischen Darstellung aus der Figur 1 als Kombination von einem dritten Widerstand 31 und einem steuerbaren Schalter 32 dargestellt ist. Dabei entspricht ein Widerstandswert des dritten Widerstands 31 einem vordefinierten Widerstandswert der aktivierten Schnellentladeeinheit 30. Ferner stellt der Schalter 32 einen Aktivierungszustand der Schnellentladeeinheit 30 dar. Wenn der Schalter 32 offen ist, dann ist die Schnellentladeeinheit 30 nicht zwischen die zwei Batteriezellterminals 11, 12 zugeschaltet und folglich auch nicht aktiviert. Wenn der Schalter 32 geschlossen ist, dann ist die Schnellentladeeinheit 30 zwischen die zwei Batteriezellterminals 11. 12 zugeschaltet und folglich auch aktiviert. Die Batteriezelle 10 umfasst eine Steuereinheit (nicht separat dargestellt), die dazu ausgebildet ist, den Schalter 32 anzusteuern, das heißt, zu öffnen und zu schließen. Durch Zuschalten der Schnellentladeeinheit 30 wird einen Schnellentladepfad erzeugt, der über die Schnellentladeeinheit 30 und den Verbindungen zwischen den Batteriezellterminals 11, 12 und den Elektroden verläuft. Ein Widerstandswert des Schnellentladepfads ist von dem vordefinierten Widerstandswert des wenigstens einen dritten Widerstands 31 der Schnellentladeeinheit 30 und von einem Widerstandswert des ersten und des zweiten Widerstands 15, 16 der Verbindungen zwischen den Batteriezellterminals 11, 12 und den Elektroden abhängig. Alternativ zu der zuvor beschriebenen Realisierung, bei der die Schnellentladeeinheit 30 außerhalb eines Batteriezellgehäuses 17 der Batteriezelle 10 angeordnet ist, kann die Schnellentladeeinheit 30 auch innerhalb des Batteriezellgehäuses 17 angeordnet und mit dem elektrochemischen Teil 20 verbunden sein oder auch als Teil des Batteriezellgehäuses 17 ausgebildet sein.

Gemäß der ersten Ausführungsform wird die Batteriezelle 10 einer Gefahrensituation ausgesetzt, die durch einen Sicherheitstest verursacht wird, während dem ein Kurzschlusspfad in einem Inneren der Batteriezelle 10 erzeugt wird. Der Kurzschlusspfad wird beispielsweise während des Sicherheitstests durch Penetrieren der Batteriezelle 10 mittels eines Nagels erzeugt. Ein Widerstandswert des Kurzschlusspfads ist typischerweise stark von einem Widerstandswert der folienförmigen Elektroden und schwach von einem Widerstandswert des Nagels abhängig.

Dabei wird der vordefinierte Widerstandswert derartig ausgewählt, dass bei zugeschalteter Schnellentladeeinheit 30 der Separator die vordefinierte Temperatur bei Abwesenheit des Kurzschlusspfads innerhalb eines vordefinierten ersten Zeitraums und bei Vorliegen des Kurzschlusspfads innerhalb eines vordefinierten zweiten Zeitraums erreicht. Der erste und der zweite Zeitraum beginnen jeweils bei Zuschalten der Schnellentladeeinheit 30 und enden jeweils bei Erreichen der vordefinierten Temperatur.

Ferner wird der vordefinierte Widerstandswert des wenigstens einen Widerstands 31 derartig ausgewählt, dass bei Abwesenheit des Kurzschlusspfads und zugeschalteter Schnellentladeeinheit 30 eine erste elektrische Energiemenge einen ersten Energiegrenzwert unterschreitet. Die erste Energiemenge stimmt mit einer Energiemenge überein, die bei Abwesenheit des Kurzschlusspfad und zugeschalteter Schnellentladeeinheit 30 infolge eines durch die Schnellentladeeinheit 30 fließenden Entladestroms während eines variablen dritten Zeitraums in Wärme umgewandelt wird. Der dritte Zeitraum beginnt gleichzeitig mit dem ersten Zeitraum und weist eine maximale Dauer auf, die größer oder gleich einer Dauer des ersten Zeitraums ist. Dabei wird der erste Energiegrenzwert derartig ausgewählt, dass nur bei seinem Überschreiten durch die erste Energiemenge eine Überhitzung der gesamten Batterie 10 auftreten kann, die ein thermisches Durchgehen der Batteriezelle 10 auslöst.

Wenn die Schnellentladeeinheit 30 bei Vorliegen des Kurzschlusspfads, der beispielsweise durch Penetrieren der Batteriezelle 10 mittels des Nagels oder durch einen Batteriezellfehler oder eine Batteriezellbeschädigung erzeugt wird, nicht zugeschaltet wird, erfolgt eine lokale Erhitzung eines den Kurzschlusspfad umfassenden Batteriezellteilbereichs. Diese lokale Erhitzung wird durch einen Entladestrom verursacht, der durch den Kurzschlusspfad fließt. Diese lokale Erhitzung kann trotz der zumindest teilweisen Deaktivierung des Separators eine lokale Überhitzung des Batteriezellteilbereichs sein, die zu einer Temperatur des Batteriezellteilbereichs führt, die einen kritischen Temperaturgrenzwert übersteigt. Ein Übersteigen des kritischen Temperaturgrenzwertes kann das thermische Durchgehen der Batteriezelle 10 auslösen.

Gemäß der ersten Ausführungsform ist die Steuereinheit, dazu ausgebildet, die Schnellentladeeinheit 30 durch Schließen des Schalters 32 innerhalb eines vierten vordefinierten Zeitraums zuzuschalten. Dabei beginnt der vierte Zeitraum unmittelbar nach Penetrieren der Batteriezelle 10 mittels des Nagels oder nach Erkennen einer anderen Batteriezellbeschädigung oder eines batteriezellinternen Kurzschlusses. Ferner endet der vierte Zeitraum bei Zuschalten der Schnellentladeeinheit 30.

In der Figur 1 ist mit I1 ein von der Batteriezelle 10 bei Vorliegen des Kurzschlusspfads und zugeschalteter Schnellentladeeinheit 30 erzeugter erster Entladestrom bezeichnet. Ferner ist mit I2 ein zweiter Entladestrom bezeichnet, der bei Vorliegen des Kurzschlusspfads und zugeschalteter Schnellentladeeinheit 30 durch den Kurzschlusspfad fließt. Auch ist mit I3 ein dritter Entladestrom bezeichnet, der bei Vorliegen des Kurzschlusspfads und zugeschalteter Schnellentladeeinheit 30 durch die Schnellentladeeinheit 30 fließt. Dabei ist der erste Entladestrom I1 gleich einer Summe von dem zweiten Entladestrom I2 und dem dritten Entladestrom I3.

Gemäß der ersten Ausführungsform ist der elektrochemische Teil 20 derartig ausgebildet und bevorzugt die Batteriezelle 10 derartig dimensioniert, dass eine zweite und eine dritte elektrische Energiemenge jeweils einen zweiten Energiegrenzwert unterschreiten. Ferner ist der elektrochemische Teil 20 derartig ausgebildet und bevorzugt die Batteriezelle 10 derartig dimensioniert, dass auch eine Summe von der zweiten und der dritten Energiegrenzwert einen dritten Energiegrenzwert unterschreitet. Dabei unterschreiten die zweite und die dritte Energiemenge sowie deren Summe jeweils den entsprechenden Energiegrenzwert dann, wenn bei Vorliegen des Kurzschlusspfads die Dauer des vierten Zeitraums einen Zeitgrenzwert und der vordefinierte Widerstandswert des wenigstens einen Widerstands 31 einen Widerstandsgrenzwert unterschreiten. Die zweite Energiemenge stimmt mit einer Energiemenge überein, die bei Vorliegen des Kurzschlusspfads und zugeschalteter Schnellentladeeinheit 30 infolge des durch den Kurzschlusspfad fließenden zweiten Entladestroms I2 während eines variablen fünften Zeitraums in Wärme umgewandelt wird. Die dritte Energiemenge stimmt mit einer Energiemenge überein, die bei Vorliegen des Kurzschlusspfads und zugeschalteter Schnellentladeeinheit 30 infolge des durch die Schnelladeeinheit 30 fließenden dritten Entladestroms I3 während des fünften Zeitraums in Wärme umgewandelt wird. Der fünfte Zeitraum beginnt gleichzeitig mit dem zweiten Zeitraum und weist eine maximale Dauer auf, die größer als eine oder gleich einer Dauer des zweiten Zeitraums ist. Weiterhin wird der zweite Energiegrenzwert derartig ausgewählt, dass nur bei seinem Überschreiten durch die zweite Energiemenge und/oder die dritte Energiemenge eine lokale Überhitzung des den Kurzschlusspfad umfassende Batteriezellbereichs auftreten kann, die das thermische Durchgehen der Batteriezelle 10 auslöst. Ferner wird der dritte Energiegrenzwert derartig ausgewählt, dass nur bei seinem Überschreiten durch die Summe von der zweiten und der dritten Energiemenge eine Überhitzung der gesamten Batteriezelle 10 auftreten kann, die das thermische Durchgehen der Batteriezelle 10 auslöst.

Der erste Energiegrenzwert, der zweite Energiegrenzwert und der dritte Energiegrenzwert sind jeweils von einer Batteriezellchemie der Batteriezelle 10 abhängig.

Eine Funktionsweise der Batteriezelle 10 wird im Folgenden mittels eines spannungsbasierten ersten Berechnungsmodells und eines strombasierten zweiten Berechnungsmodells erklärt.

Gemäß dem ersten Berechnungsmodell ist die Leerlaufspannung U0 von einem Ladezustand der Batteriezelle 10 abhängig. Ferner weist der Innenwiderstand 21 des elektrochemischen Teils 20 einen zeitabhängigen Widerstandswert auf.

Gemäß dem zweiten Berechnungsmodell weist ein maximal von der Batteriezelle 10 erzeugbarer Entladestrom, der auch als maximaler Entladestrom bezeichnet wird, einen zeitabhängigen Stromwert auf, der ferner von der Batteriezellchemie und bevorzugt auch von einer Batteriezellgröße der Batteriezelle 10 abhängig ist. Ferner weist der Innenwiderstands 21 des elektrochemischen Teils 20 einen zeitabhängigen Widerstandswert auf, der ferner von dem Stromwert des maximalen Entladestroms abhängig ist.

Gemäß jedem Berechnungsmodell führt ein Zuschalten der Schnellentladeeinheit 30 bei Abwesenheit des Kurzschlusspfads zum Auftreten des durch die Schnellentladeeinheit 30 fließenden dritten Entladestroms I3. Dies führt zum Auftreten eines Spannungsabfalls über einer jeden der Verbindungen zwischen den Batteriezellterminals 11, 12 und den Elektroden. Dies führt wiederum zum Auftreten einer von dem elektrochemischen Teil 20 zwischen den zwei Batteriezellterminals 11, 12 angelegten Klemmenspannung, die gegenüber der Leerlaufspannung U0 unterschiedlich ist.

Gemäß dem ersten Berechnungsmodell führt bei Vorliegen des Kurzschlusspfads und zugeschalteter Schnellentladeeinheit 30 ein hoher Stromwert des durch die Schnellentladeeinheit 30 fließenden dritten Entladestroms I3 zu einem hohen Spannungswert einer über dem Innenwiderstand 21 des elektrochemischen Teils 20 abfallenden ersten Spannung U1. Dies führt wiederum zu einem reduzierten Spannungswert einer über den Kurzschlusspfad abfallenden zweiten Spannung U2. Dies führt wiederum zu einem reduzierten Stromwert des zweiten Entladestroms I2 und folglich auch zu einer reduzierten lokalen Erhitzung des den Kurzschlusspfad umfassenden Batteriezellteilbereichs, die hauptsächlich durch den zweiten Entladestrom I2 verursacht wird. In der Figur 1 ist mit U3 eine dritte Spannung bezeichnet, die bei Vorliegen des Kurzschlusspfads und zugeschalteter Schnellentladeeinheit 30 über der Schnellentladeeinheit 30 abfällt.

Gemäß dem zweiten Berechnungsmodell ist bei Abwesenheit des Kurzschlusspfads und zugeschalteter Schnellentladeeinheit 30 der durch die Schnellentladeeinheit 30 fließende Entladestrom gleich dem maximalen Entladestrom. Hier stimmt die zuvor definierte erste Energiemenge mit einer elektrischen Energiemenge überein, die infolge des durch die Schnellentladeeinheit 30 fließenden maximalen Entladestroms während des dritten variablen Zeitraums in Wärme umgewandelt wird.

Gemäß dem zweiten Berechnungsmodell ist bei Vorliegen des Kurzschlusspfads und zugeschalteter Schnellentladeeinheit 30 der erste Entladestrom I1 gleich dem maximalen Entladestrom. Durch Zuschalten der Schnellentladeeinheit 30 bei Vorliegen des Kurzschlusspfads wird der über die Schnellentladeeinheit 30 verlaufende Schnellentladepfad parallel zu dem Kurzschlusspfad zugeschaltet. Wenn der Schnellentladepfad 30 parallel zu dem Kurzschlusspfad zugeschaltet ist, ist der maximale Entladestrom gleich einer Summe von dem durch den Kurzschlusspfad fließenden zweiten Entladestrom I2 und dem durch die Schnellentladeeinheit 30 fließenden dritten Entladestrom I3. Ferner teilt sich der maximale Entladestrom zwischen dem Kurzschlusspfad und dem Schnellentladepfad in Abhängigkeit von einem Quotienten zwischen den Widerstandswerten der beiden Pfade auf. Gemäß dem zweiten Berechnungsmodell führt ein Zuschalten der Schnellentladeeinheit 30 bei Vorliegen des Kurzschlusspfads zu einem hohen Stromwert des dritten Entladestroms I3. Dies führt wiederum zu einem reduzierten Stromwert des zweiten Entladestromes I2 und folglich auch hier zu einer reduzierten lokalen Erhitzung des den Kurzschlusspfad umfassenden Batteriezellteilbereichs, die hauptsächlich durch den zweiten Entladestrom I2 verursacht wird. Wenn diese lokale Erhitzung zu einer Temperatur des Batteriezellteilbereichs führt, die den kritischen Temperaturgrenzwert unterschreitet, kann das thermische Durchgehen der Batteriezelle 10 vermieden werden.
Figur 2 zeigt einen Verlauf des zuvor definierten ersten Entladestroms I1, einen Verlauf des zuvor definierten und durch den Kurzschlusspfad fließenden zweiten Entladestroms I2 und einen Verlauf des zuvor definierten und durch die Schnellladeeinheit 30 fließenden dritten Entladestroms I3 jeweils in Abhängigkeit von dem zuvor definierten fünften variablen Zeitraum. Hier ist nach dem Zuschalten der Schnellentladeeinheit der erste Entladestrom I1 gleich dem maximalen Entladestrom IM und der maximale Entladestrom IM gleich der Summe von dem zweiten Entladestrom I2 und dem dritten Entladestrom I3. In der Figur 2 ist mit t1 eine Dauer des zuvor definierten vierten Zeitraumes bezeichnet. Figur 3 zeigt einen Verlauf der zuvor definierte zweiten Energiemenge E2, einen Verlauf der zuvor definierte dritten Energiemenge E3 und einen Verlauf der Summe E23 von der zweiten Energiemenge E2 und der dritten Energiemenge E3 jeweils in Abhängigkeit von dem fünften variablen Zeitraum. Die in der Figur 3 dargestellten Verläufe treten bei Vorliegen der in der Figur 2 dargestellten Verläufe auf. Die in den Figuren 2 und 3 dargestellten Verläufe werden jeweils bei Anwendung des zweiten Berechnungsmodells bestimmt. Die in den Figuren 2 und 3 dargestellten Verläufe kommen dann vor, wenn die Dauer t1 des vierten Zeitraums den zuvor definierten Zeitgrenzwert und der vordefinierte Widerstand des wenigstens einen dritten Widerstands 31 den zuvor definieren Widerstandsgrenzwert unterschreiten. Figur 2 zeigt ferner einen Verlauf des zweiten Entladestroms I2. Aus der Figur 2 ist ersichtlich, dass der zweite Entladestrom I2 vor dem Zuschalten der Schnellentladeeinheit hohe Stromwerte aufweist und unmittelbar nach Zuschalten der Schnellentladeeinheit 30 wesentlich kleinere Stromwerte annimmt. Aus der Figur 2 ist ferner ersichtlich, dass jeder der ersten, zweiten und dritten Entladeströme I1, I2, I3 nach einem Beenden des zweiten Zeitraumes sehr schnell einen Stromwert von näherungsweise 0 A annimmt. Figur 3 zeigt auch den zuvor definierten zweiten Energiegrenzwert GE2 und den zuvor definierten dritten Energiegrenzwert GE3. Aus der Figur 3 ist ersichtlich, dass sowohl die zweite Energiemenge E2 als auch die dritte Energiemenge E3 den zweiten Energiegrenzwert GE2 zu jedem Zeitpunkt innerhalb des zweiten Zeitraumes unterschreiten. In den Figuren 2 und 3 ist mit t2 eine Dauer des zweiten Zeitraumes bezeichnet. Aus der Figur 3 ist ferner ersichtlich, dass die Summe E23 aus der zweiten Energiemenge E2 und der dritten Energiemenge E3 zu jedem Zeitpunkt innerhalb des zweiten Zeitraumes den dritten Grenzwert GE3 unterschreitet. Folglich wird das thermische Durchgehen der Batteriezelle 10 vermieden. In der Figur 2 gibt eine mit IW bezeichnete Achse Stromwerte an. In Figur 3 gibt eine mit EW bezeichnete Achse Energiemengen an. In den Figuren 2 und 3 gibt eine mit t bezeichnete Achse die Zeit an.

Eine Abwesenheit der Schnellentladeeinheit 30 sowie ein Überschreiten des Zeitgrenzwerts und/oder des Widerstandsgrenzwerts würde jeweils zu einem innerhalb des zweiten Zeitraumes vorkommenden Überschreiten des zweiten Energiegrenzwertes GE2 durch die zweite Energiemenge E2 führen. Ferner würde eine ungeeignete Wahl von Batteriezelleigenschaften auch bei Unterschreiten des Zeitgrenzwerts und des Widerstandsgrenzwerts zu einem innerhalb des zweiten Zeitraumes vorkommenden Überschreiten des zweiten Energiegrenzwertes GE2 durch die dritten Energiemenge E3 und bevorzugt auch durch die zweite Energiemenge E2 führen. Die Batteriezelleigenschaften umfassen die Batteriezellchemie und bevorzugt die Batteriezellgröße. Dabei könnte die ungeeignete Wahl der Batteriezelleigenschaften auch bei Unterschreiten des Zeitgrenzwerts und des Widerstandsgrenzwerts auch zu einem innerhalb des zweiten Zeitraumes vorkommenden Überschreiten des dritten Energiegrenzwertes GE3 durch die Summe E23 zwischen der zweiten Energiemenge E2 und der dritten Energiemenge E3 führen. Hier zu berücksichtigen wäre, dass der Stromwert des maximalen Entladestroms IM abhängig von den zuvor genannten Batteriezelleigenschaften ist. Hier zu berücksichtigen wäre ferner, dass eine Steigung des Verlaufs des zweiten Entladestroms I2 und des Verlaufs des dritten Entladestroms I3 und folglich auch eine Steigung des Verlaufs der zweiten Energiemenge E2 und des Verlaufs der dritten Energiemenge E3 jeweils abhängig von der Batteriezellchemie sind. Folglich können die zuvor genannten Steigungen durch eine geeignete Wahl der Batteriezellchemie derartig eingestellt werden, dass die zweite Energiemenge E2 und die dritte Energiemenge E3 jeweils den zweiten Energiegrenzwert GE2 unterschreiten und deren Summe E23 den dritten Energiegrenzwert GE3 unterschreitet. Unter jeder Steigung wird hier die erste Ableitung des entsprechenden Verlaufs nach der Zeit verstanden.

Alle zuvor in Zusammenhang mit der Figur 3 aufgelisteten Überschreitungen würden innerhalb des zweiten Zeitraumes vorkommen, das heißt, vor der zumindest teilweisen Deaktivierung des Separators, und folglich jeweils das thermische Durchgehen der Batteriezelle 10 auslösen.

In Folgenden werden Faktoren angegeben, die bei Anwendung des zweiten Berechnungsmodells zu einer Verringerung einer Wahrscheinlichkeit eines Auslösens des thermischen Durchgehens der Batteriezelle 10 führen.

Eine Verringerung der zuvor genannten Wahrscheinlichkeit kann durch eine Beeinflussung des Stromwertes des maximalen Entladestroms IM erfolgen. Diese Beeinflussung kann durch eine geeignete Wahl eines Elektrolyten und von aktiven Materialien, die in dem elektrochemischen Teil 20 der Batteriezelle 10 eingesetzt werden, erreicht werden. Diese Beeinflussung kann ferner durch eine geeignete Wahl der Batteriezellgröße und durch Einsetzen von zum Begrenzen des Stromwerts des maximalen Entladestroms IM geeigneten aktiven Schichten in dem elektrochemischen Teil 20 erreicht werden.

Eine Verringerung der zuvor genannten Wahrscheinlichkeit kann ferner bei Vorliegen des Kurzschlusspfads und bei zugeschalteter Schnellentladeeinheit 30 durch eine Reduzierung eines Stromwerts des durch den Kurzschlusspfad fließenden zweiten Entladestroms I2 und/oder durch Kühlen erfolgen. Diese Reduzierung kann durch eine Erhöhung des Widerstandswerts des Kurzschlusspfads, insbesondere durch eine Erhöhung des Widerstandswerts der folienförmigen Elektroden erreicht werden.

Eine Verringerung der zuvor genannten Wahrscheinlichkeit kann weiterhin bei Vorliegen des Kurzschlusspfads und zugeschalteter Schnellentladeeinheit 30 durch eine Erhöhung eines Stromwerts des durch den Schnellentladestrompfad fließenden dritten Entladestroms I3 erfolgen. Diese Erhöhung kann durch eine Reduzierung des Widerstandswerts der Schnellentladepfads, insbesondere des Widerstandswerts des ersten und zweiten Widerstands 15, 16 der Verbindungen zwischen den Batteriezellterminals 11, 12 und den Elektroden erreicht werden.

Eine Verringerung der zuvor genannten Wahrscheinlichkeit kann auch durch eine Beeinflussung des ersten Energiegrenzwerts, der zweiten Energiegrenzwerts GE2 und des dritten Energiegrenzwerts GE3 erfolgen. Diese Beeinflussung kann durch eine Änderung der aktiven Materialien und des Separators, die in dem elektrochemischen Teil 20 verwendet werden, erreicht werden.

Neben der voranstehenden schriftlichen Offenbarung wird hiermit zur weiteren Offenbarung der Erfindung ergänzend auf die Darstellung in den Figuren 1 bis 3 Bezug genommen.

## Patentansprüche

1. Batteriezelle (10) mit zwei von innerhalb und/oder außerhalb der Batteriezelle (10) kontaktierbaren Batteriezellterminals (11, 12) und einem beispielsweise als Jelly Roll ausgebildeten elektrochemischen Teil (20), der mehrere Elektroden und wenigstens einen Separator umfasst, wobei die Batteriezelle eine Schnellentladeeinheit (30) umfasst, die zwischen die Batteriezellterminals (11, 12) zuschaltbar ist und einen vordefinierten Widerstandswert aufweist,
**dadurch gekennzeichnet, dass**
der wenigstens eine Separator bei Erreichen einer vordefinierten Temperatur für in dem elektrochemischen Teil (20) erzeugbare Ionen zumindest teilweise undurchlässig wird,
der vordefinierte Widerstandswert derartig ausgewählt wird, dass bei zugeschalteter Schnellentladeeinheit (30) der wenigstens eine Separator die vordefinierte Temperatur bei Abwesenheit eines Kurzschlusspfads in einem Inneren der Batteriezelle (10) innerhalb eines vordefinierten ersten Zeitraums erreicht und bei Vorliegen des Kurzschlusspfads innerhalb eines vordefinierte zweiten Zeitraums erreicht und bei Abwesenheit des Kurzschlusspfads eine erste elektrische Energiemenge, die infolge eines durch die Schnellentladeeinheit (30) fließenden Entladestroms während eines variablen dritten Zeitraums in Wärme umgewandelt wird, einen ersten Energiegrenzwert unterschreitet, wobei der erste Energiegrenzwert derartig ausgewählt wird, dass nur bei seinem Überschreiten durch die erste Energiemenge eine Überhitzung der gesamten Batteriezelle (10) auftreten kann, die ein thermisches Durchgehen der Batteriezelle (10) auslöst und wobei der erste und der zweite Zeitraum jeweils bei Zuschalten der Schnellentladeeinheit (30) beginnen und jeweils bei Erreichen der vordefinierten Temperatur enden und der dritte Zeitraum gleichzeitig mit dem ersten Zeitraum beginnt und eine maximale Dauer aufweist, die größer als eine oder gleich einer Dauer des ersten Zeitraums ist.

2. Batteriezelle (10) nach Anspruch 1, **gekennzeichnet durch** eine Steuereinheit, die dazu ausgebildet ist, die Schnellentladeeinheit (30) innerhalb eines vierten vordefinierten Zeitraums zwischen die Batteriezellterminals (11, 12) zuzuschalten, wobei der vierte Zeitraum unmittelbar nach einem Erkennen einer Gefahrensituation, in der in dem Inneren der Batteriezelle (10) der Kurzschusspfad auftritt oder auftreten kann oder in der ein hohes Risiko eines bevorstehenden kritischen Verhaltens der Batteriezelle (10) erwartet wird, beginnt und bei Zuschalten der Schnellentladeeinheit (30) endet.

3. Batteriezelle (10) nach Anspruch 2, **dadurch gekennzeichnet, dass** der elektrochemische Teil (20) derartig ausgebildet und bevorzugt die Batteriezelle (10) derartig dimensioniert ist, dass, wenn bei Vorliegen des Kurzschlusspfads eine Dauer (t1) des vierten Zeitraums einen Zeitgrenzwert und der vordefinierte Widerstandswert einen Widerstandsgrenzwert unterschreiten, eine zweite elektrische Energiemenge (E2), die infolge eines durch den Kurzschlusspfad fließenden Entladestroms (I2) während eines variablen fünften Zeitraums in Wärme umgewandelt wird, und eine dritte elektrische Energiemenge (E3), die infolge eines durch die Schnellentladeeinheit (30) fließenden Entladestroms (I3) während des fünften Zeitraums in Wärme umgewandelt wird, jeweils einen zweiten Energiegrenzwert (GE2) unterschreiten und/oder eine Summe (E23) zwischen der zweiten Energiemenge (E2) und der dritten Energiemenge (E3) einen dritten Energiegrenzwert (GE3) unterschreitet, wobei der fünfte Zeitraum gleichzeitig mit dem zweiten Zeitraum beginnt und eine maximale Dauer aufweist, die größer als eine oder gleich einer Dauer (t2) des zweiten Zeitraums ist.

4. Batteriezelle (10) nach Anspruch 3, **dadurch gekennzeichnet, dass** der zweite Energiegrenzwert (GE2) kleiner als der dritte Energiegrenzwert (GE3) ist und/oder der dritte Energiegrenzwert (GE3) kleiner als der oder gleich dem ersten Energiegrenzwert ist.

5. Verfahren zum Schnellentladen einer Batteriezelle (10) nach einem der vorangehenden Ansprüche, **gekennzeichnet durch**:
Erkennen einer Gefahrensituation, in der sich die Batteriezelle (10) in einem Zustand befindet, in dem der Kurzschlusspfad in dem Inneren der Batteriezelle (10) auftritt oder auftreten kann oder in dem ein hohes Risiko eines bevorstehenden kritischen Verhaltens der Batteriezelle (10) erwartet wird, und
Zuschalten der Schnellentladeeinheit (30) zwischen die beiden von innerhalb und/oder außerhalb der Batteriezelle (10) kontaktierbaren Batteriezellterminals (11, 12) bei Vorliegen der Gefahrensituation.

6. Verfahren nach Anspruch 5, **dadurch gekennzeichnet, dass** das Zuschalten innerhalb eines vierten vordefinierten Zeitraums erfolgt, wobei der vierte Zeitraum unmittelbar nach einem Erkennen einer Gefahrensituation, in der in dem Inneren der Batteriezelle (10) der Kurzschusspfad auftritt oder auftreten kann oder in der ein hohes Risiko eines bevorstehenden kritischen Verhaltens der Batteriezelle (10) erwartet wird, beginnt und bei Zuschalten der Schnellentladeeinheit (30) endet.

7. Batteriesystem mit einer Batterie (10) mit mindestens einer Batteriezelle nach einem der Ansprüche 1 bis 4.

## Claims

1. Battery cell (10) with two battery cell terminals (11, 12) which are contactable from inside and/or outside the battery cell (10), and an electrochemical part (20) configured, for example, as a jelly roll and comprising a plurality of electrodes and at least one separator, wherein the battery cell comprises a rapid discharge unit (30) which is connectable between the battery cell terminals (11, 12) and has a predefined resistance value, **characterized in that**, upon the achievement of a predefined temperature, the at least one separator is at least partially impermeable to ions which can be generated in the electrochemical part (20), the predefined resistance value is selected such that, when the rapid discharge unit (30) is brought into circuit, the at least one separator achieves the predefined temperature in the absence of a short-circuit path in the interior of the battery cell (10) within a predefined first time interval and, in the presence of a short-circuit path in the interior of the battery cell, within a predefined second time interval, and, in the absence of the short-circuit path, a first quantity of electrical energy which, as a result of a discharge current flowing through the rapid discharge unit (30) during a variable third time interval, is converted into heat, undershoots a first energy limit, wherein the first energy limit is selected such that overheating of the entire battery cell (10), thus initiating a thermal runaway of the battery cell (10), can only occur in the event of the overshoot thereof by the first quantity of energy, and wherein the first and second time intervals commence respectively upon the switching-in of the rapid discharge unit (30), and end respectively upon the achievement of the predefined temperature, and the third time interval commences simultaneously with the first time interval, and has a maximum duration which is equal to or greater than the duration of the first time interval.

2. Battery cell (10) according to Claim 1, **characterized by** a control unit which is designed to switch-in the rapid discharge unit (30) between the battery terminals (11, 12) within a fourth predefined time interval, wherein the fourth time interval commences immediately after the detection of a hazard situation, in which a short-circuit path has appeared or might appear in the interior of the battery cell (10), or in which a high risk of an aforementioned critical behavior by the battery cell (10) is anticipated, and ends upon the switching-in of the rapid discharge unit (30) .

3. Battery cell (10) according to Claim 2, **characterized in that** the electrochemical part (20) is configured and the battery cell (10) is preferably dimensioned such that, in the presence of a short-circuit path, the duration (t1) of the fourth time interval undershoots a time limit and the predefined resistance value undershoots a limiting value for resistance, a second quantity of electrical energy (E2) which, as a result of a discharge current (12) flowing in the short-circuit path during a variable fifth time interval, is converted into heat, and a third quantity of electrical energy (E3) which, as a result of a discharge current (13) flowing in the rapid discharge unit (30) during the fifth time interval, is converted into heat, respectively undershoot a second energy limit (GE2) and/or a sum (E23) of the second quantity of energy (E2) and the third quantity of energy (E3) undershoot a third energy limit (GE3), wherein the fifth time interval commences simultaneously with the second time interval, and has a maximum duration which is equal to or greater than the duration (t2) of the second time interval.

4. Battery cell (10) according to Claim 3, **characterized in that** the second energy limit (GE2) is lower than the third energy limit (GE3) and/or the third energy limit (GE3) is equal to or lower than the first energy limit.

5. Method for the rapid discharge of a battery cell (10) according to one of the preceding claims, **characterized by**:
Identification of a hazard situation, in which the battery cell (10) is in a state in which the short-circuit path has appeared or might appear in the interior of the battery cell (10), or in which a high risk of the aforementioned critical behavior of the battery cell (10) is anticipated, and
Switching-in of the rapid discharge unit (30) between the two battery cell terminals (11, 12), which are contactable from inside and/or outside the battery cell (10), in the presence of a hazard situation.

6. Method according to Claim 5, **characterized in that** the switching-in occurs within a fourth predefined time interval, wherein the fourth time interval commences immediately after the detection of a hazard situation, in which a short-circuit path has appeared or might appear in the interior of the battery cell (10), or in which a high risk of an aforementioned critical behavior by the battery cell (10) is anticipated, and ends upon the switching-in of the rapid discharge unit (30) .

7. Battery system with a battery (10) having at least one battery cell according to one of Claims 1 to 4.

## Revendications

1. Cellule (10) de batterie présentant deux bornes (11, 12) de cellule de batterie qui peuvent être raccordées à l'intérieur et/ou à l'extérieur de la cellule (10) de batterie et une partie électrochimique (20), configurée par exemple sous la forme d'un "jelly roll" (gâteau roulé), qui comporte plusieurs électrodes et au moins un séparateur,
la cellule de batterie comportant une unité (30) de décharge rapide qui peut être raccordée entre les bornes (11, 12) de cellule de batterie et dont la valeur de la résistance est prédéfinie,
**caractérisée en ce que**
le ou les séparateurs sont au moins en partie imperméables aux ions qui peuvent être formés dans la partie électrochimique (20) lorsqu'une température prédéfinie est atteinte,
la valeur prédéfinie de la résistance est sélectionnée de telle sorte que lorsque l'unité (30) de décharge rapide est raccordée, le ou les séparateurs atteignent la température prédéfinie en un premier intervalle de temps prédéfini en l'absence d'un parcours de court-circuit à l'intérieur de la cellule (10) de batterie et atteignent cette température en un deuxième intervalle de temps prédéfini en cas de présence du parcours de court-circuit, et en cas d'absence de parcours de court-circuit, une première quantité d'énergie électrique convertie en chaleur en un troisième intervalle de temps variable suite à l'écoulement du courant de décharge dans l'unité (30) de décharge rapide n'atteint pas une première valeur limite d'énergie, la première valeur limite d'énergie étant sélectionnée de telle sorte que la surchauffe de l'ensemble de la cellule (10) de batterie qui déclenche une divergence thermique de la cellule (10) de batterie ne puisse survenir que lorsqu'elle est dépassée par la première quantité d'énergie, le premier et le deuxième intervalle de temps commençant chacun lors du branchement de l'unité (30) de décharge rapide et se terminant chacun lorsque la température prédéfinie est atteinte, et le troisième intervalle de temps commençant en même temps que le premier intervalle de temps et présente une durée maximale supérieure ou égale à la durée du premier intervalle de temps.

2. Cellule (10) de batterie selon la revendication 1, **caractérisée par** une unité de commande configurée pour raccorder l'unité (30) de décharge rapide entre les bornes (11, 12) de cellule de batterie au cours d'un quatrième intervalle de temps prédéfini, le quatrième intervalle de temps commençant directement après la détection d'une situation dangereuse dans laquelle le parcours de court-circuit survient ou peut survenir à l'intérieur de la cellule (10) de batterie ou dans laquelle un haut risque de comportement critique imminent de la cellule (10) de batterie est attendu, et se terminant lors du branchement de l'unité (30) de décharge rapide.

3. Cellule (10) de batterie selon la revendication 2, **caractérisée en ce que** la partie électrochimique (20) est configurée et la cellule (10) de batterie est de préférence dimensionnée de telle sorte que lorsque le parcours de court-circuit est présent, la durée (t1) du quatrième intervalle de temps dépasse une valeur de temps limite et la valeur prédéfinie de la résistance n'atteint pas une valeur limite de résistance, une deuxième quantité d'énergie électrique (E2) convertie en chaleur pendant un cinquième intervalle de temps variable suite à l'écoulement d'un courant de décharge (I2) dans le parcours de court-circuit et une troisième quantité d'énergie électrique (E3) convertie en chaleur pendant le cinquième intervalle de temps suite à l'écoulement du courant de décharge (I3) dans l'unité (30) de décharge rapide et n'atteignent aucune une deuxième valeur limite d'énergie (GE2) et/ou la somme (E23) de la deuxième quantité d'énergie électrique (E2) et de la troisième quantité d'énergie électrique (E3) n'atteint pas une troisième valeur limite d'énergie (GE3), le cinquième intervalle de temps commençant en même temps que le deuxième intervalle de temps et présentant une durée maximale supérieure ou égale à la durée (t2) du deuxième intervalle de temps.

4. Cellule (10) de batterie selon la revendication 3, **caractérisée en ce que** la deuxième valeur limite d'énergie (GE2) est inférieure à la troisième valeur limite d'énergie (GE3) et/ou **en ce que** la troisième valeur limite d'énergie (GE3) est inférieure ou égale à la première valeur limite d'énergie.

5. Procédé de décharge rapide d'une cellule de batterie (10) selon l'une des revendications précédentes, **caractérisé par** les étapes qui consistent à :
détecter une situation dangereuse dans laquelle la cellule de batterie (10) se trouve dans un état dans lequel le parcours de court-circuit survient ou peut survenir à l'intérieur de la cellule (10) de batterie ou dans laquelle un haut risque de comportement critique imminent de la cellule (10) de batterie est attendu et
brancher l'unité (30) de décharge rapide entre les deux bornes (11, 12) de cellule de batterie qui peuvent être raccordées à l'intérieur et/ou à l'extérieur de la cellule (10) de batterie en cas de présence de la situation dangereuse.

6. Procédé selon la revendication 5, **caractérisé en ce que** le branchement s'effectue à l'intérieur d'un quatrième intervalle de temps prédéfini, le quatrième intervalle de temps commençant directement après la détection d'une situation dangereuse dans laquelle le parcours de court-circuit survient ou peut survenir à l'intérieur de la cellule (10) de batterie ou dans laquelle un haut risque de comportement critique imminent de la cellule (10) de batterie est attendu, et se terminant lors du branchement de l'unité (30) de décharge rapide.

7. Système de batterie doté d'une batterie (10) présentant au moins une cellule de batterie selon l'une des revendications 1 à 4.
